## Europäisches Patentamt

## European Patent Office

## Office européen des brevets

(11) Numéro de publication: **0 200 619**
**B1**

(12) # FASCICULE DE BREVET EUROPEEN

(45) Date de publication du fascicule du brevet:
**19.04.89**

(51) Int. Cl.⁴: **G01F 23/26**

(21) Numéro de dépôt: **86400771.1**

(22) Date de dépôt: **10.04.86**

(54) Dispositif de mesure de niveau d'un milieu conducteur électrique contenu dans une enveloppe et ses applications.

(30) Priorité: **23.04.85 FR 8506161**

(43) Date de publication de la demande:
**10.12.86 Bulletin 86/45**

(45) Mention de la délivrance du brevet:
**19.04.89 Bulletin 89/16**

(84) Etats contractants désignés:
**BE DE GB IT NL**

(56) Documents cités:
**EP-A- 0 019 816**
**EP-A- 0 087 382**
**FR-A- 2 169 711**
**FR-A- 2 242 669**
**US-A- 4 152 937**
**US-A- 4 170 754**

(73) Titulaire: **NOVATOME, La Boursidière R.N. 186,
F-92357 Le Plessis Robinson(FR)**

(72) Inventeur: **Vaillant, Philippe, 5 bis rue Antoine Chantin,
F-75014 Paris(FR)**

(74) Mandataire: **Polus, Camille et al, c/o Cabinet
Lavoix 2, Place d'Estienne d'Orves, F-75441 Paris
Cedex 09(FR)**

## Description

L'invention concerne un dispositif de mesure du niveau d'un milieu conducteur électrique contenu dans une enveloppe, dont le niveau supérieur peut se déplacer entre deux positions extrêmes à l'intérieur de cette enveloppe.

Lorsqu'on utilise des liquides conducteurs électriques, tels que des métaux liquides, il peut être nécessaire de connaître de façon précise le niveau de ces liquides conducteurs à l'intérieur de réservoirs ou de canalisations. En particulier, dans le cas des réacteurs nucléaires à neutrons rapides dans lesquels on utilise du sodium liquide comme fluides d'échange primaire et secondaire, il est nécessaire de connaître le niveau de ce sodium liquide dans certaines parties des circuits où ce sodium liquide est utilisé.

Il est bien connu d'utiliser, pour ces mesures de niveau, des sondes comportant deux bobinages électriques enroulés sur un support lui-même fixé par rapport à l'enveloppe contenant le milieu conducteur électrique dont on mesure le niveau. L'un des bobinages ou bobinage primaire est alimenté en courant électrique alternatif et la tension induite dans le second bobinage, ou bobinage secondaire, est mesurée, cette tension induite ayant une valeur dépendant du couplage des deux enroulements, par l'intermédiaire du milieu conducteur. Le couplage des deux bobinages qui sont plongés partiellement dans le milieu conducteur dépend évidemment du niveau de ce milieu conducteur dans l'enveloppe.

Dans le US-A 4 152 937, on a proposé une sonde du type décrit comportant à ses extrémités un nombre de spires accru, de façon à éliminer, dans la mesure du possible, la variation non linéaire du signal de sortie de la sonde, au voisinage de ses extrémités.

De telles sondes de niveau présentent cependant l'inconvénient de nécessiter un étalonnage préalable à leur utilisation pour la mesure de niveau dans un milieu conducteur donné. Cet étalonnage doit être effectué à nouveau à chaque fois qu'on passe d'un milieu conducteur à un autre milieu dont la conductivité électrique est différente. L'utilisation de ces sondes de niveau dans une installation destinée à recevoir des milieux conducteurs différents conduit donc à des difficultés lors de leur utilisation.

D'autre part, ces sondes de niveau sont très sensibles aux variations de température du milieu conducteur dans lequel elles sont plongées, ce qui nécessite d'utiliser des dispositifs de compensation de température relativement compliqués.

Dans le EP-A 87 382, on a décrit un procédé et un dispositif de mesure de niveau de métal liquide dans une lingotière de coulée continue qui associe au moins trois bobinages secondaires à un bobinage primaire. On calcule les différences entre les tensions secondaires mesurées sur les différents bobinages et on déduit la position du niveau, de la position du maximum des différences de tensions.

Pour obtenir une bonne précision de mesure, il est nécessaire de placer un grand nombre de bobinages secondaires suivant la hauteur de la lingotière. Le traitement des signaux est complexe dans la mesure où il n'y a pas une relation simple entre le signal de sortie de la sonde et le niveau à mesurer, permettant une détermination rapide du niveau, lorsqu'on a réalisé l'étalonnage de la sonde.

Dans les installations connues où l'on utilise des sondes de niveau, le niveau supérieur du milieu conducteur dont on mesure la position, est amené à se déplacer, pendant le fonctionnement de l'installation, entre deux positions extrêmes qui définissent une plage de mesure. L'étalonnage de la sonde doit donc prendre en compte l'ensemble de cette plage de mesure et établir avec une précision suffisante la correspondance entre les tensions secondaires et les niveaux mesurés.

Le but de l'invention est donc de proposer un dispositif de mesure du niveau d'un milieu conducteur électrique contenu dans une enveloppe dont le niveau supérieur peut se déplacer entre deux positions extrêmes à l'intérieur de l'enveloppe, comportant deux bobinages électriques plongés au moins partiellement dans le milieu conducteur et un support de fixation des bobinages par rapport à l'enveloppe, la mesure de niveau étant réalisée par mesure de la tension électrique induite par l'un des bobinages ou bobinage primaire qui est alimenté en courant électrique alternatif, dans l'autre bobinage ou bobinage secondaire, le bobinage secondaire comportant au moins trois enroulements distincts placés les uns à la suite des autres dans la direction verticale sur le support en position de mesure dans l'enveloppe, avec leurs axes d'enroulement verticaux et le dispositif de mesure comportant un moyen de détermination du niveau par détection des tensions induites dans chacun des enroulements du bobinage secondaire par le bobinage primaire disposé sur le support sur toute la longueur du bobinage secondaire, ce dispositif de mesure permettant à la fois de s'affranchir d'un étalonnage préalable, même dans le cas de changement de milieu conducteur, pour toute la plage de mesure et d'éviter d'utiliser des dispositifs de compensation de température et de traitement de signaux complexes.

Dans ce but, l'enroulement extrême inférieur est situé entièrement en-dessous de la position extrême inférieure du niveau du milieu conducteur, l'enroulement extrême supérieur est situé entièrement au-dessus de la position extrême supérieure de ce niveau et l'enroulement central, d'une longueur sensiblement égale à la distance verticale entre les positions extrêmes du niveau est situé entre ces deux positions et le moyen de détermination du niveau est un moyen de comparaison entre les tensions induites dans les enroulements extrêmes d'une part et dans l'enroulement central d'autre part.

Afin de bien faire comprendre l'invention, on va maintenant décrire, en se référant aux figures jointes en annexe, un mode de réalisation d'un dispositif de mesure de niveau suivant l'invention.

Dans ces figures:

– la Fig. 1 est une vue en coupe par un plan vertical d'un dispositif de mesure de niveau suivant l'invention en position dans une enveloppe renfermant un milieu conducteur;

– la Fig. 2 est une représentation schématique des bobinages primaire et secondaire du dispositif de mesure de niveau représenté à la Fig. 1;

– la Fig. 3 est une représentation schématique des circuits du moyen de détermination de niveau associé à la sonde représentée sur la Fig. 1;

– la Fig. 4 est une vue de côté suivant A de la Fig. 5, d'un mode de réalisation particulier du support des bobinages de la sonde représentée sur la Fig. 1;

– la Fig. 5 est une vue en coupe suivant VV de la Fig. 4.

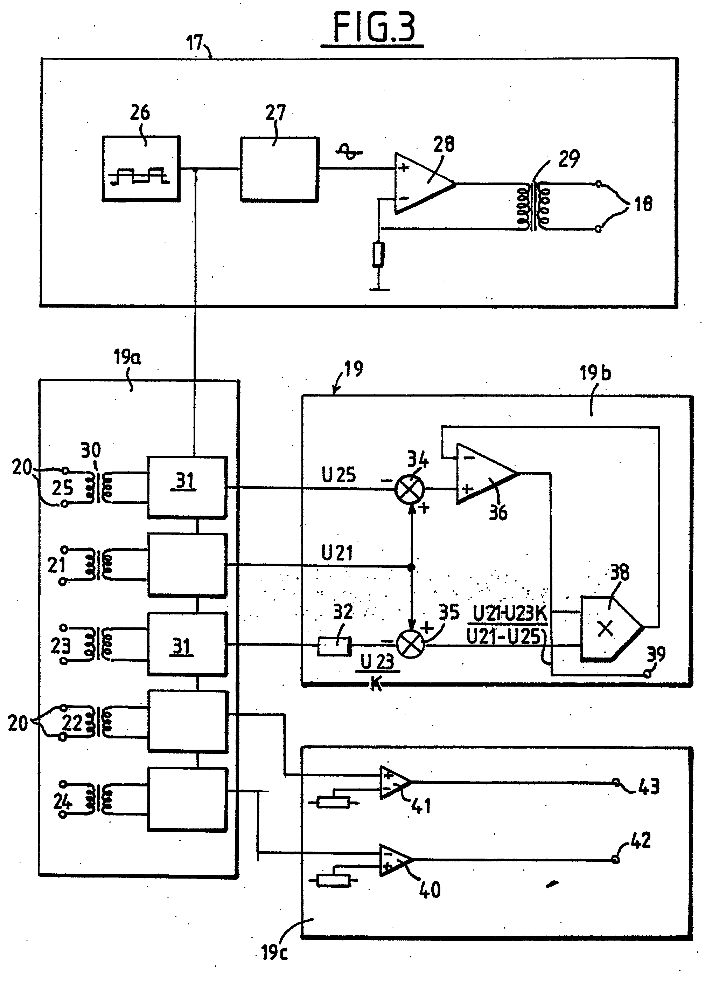

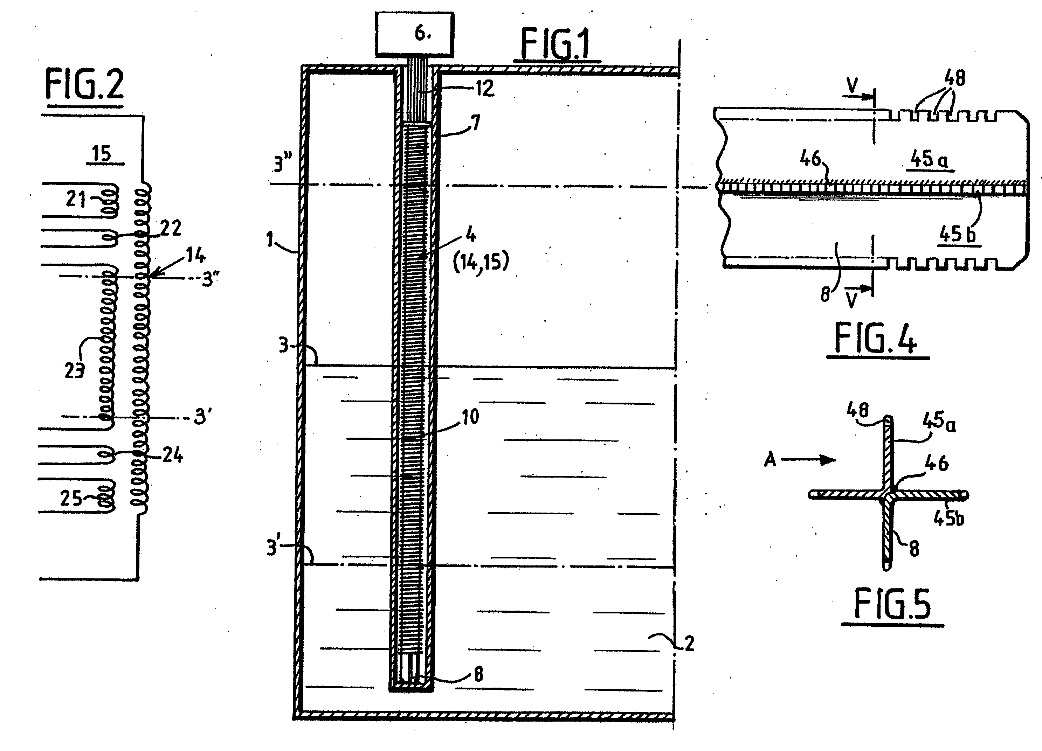

Sur la Fig. 1, on voit l'enveloppe fermée 1 d'un réservoir contenant un milieu liquide conducteur 2 qui peut être par exemple un métal liquide tel que le sodium. Le niveau supérieur 3 de ce métal liquide peut se déplacer, pendant le fonctionnement de l'installation dont fait partie le réservoir, entre une position extrême inférieure 3' et une position extrême supérieure 3".

La position du niveau 3 entre ces deux limites 3' et 3" définissant la plage de mesure, peut être mesurée grâce à une sonde 4 associée à un moyen de détermination de niveau 6 constitué par des circuits électroniques qui seront décrits plus en détail en se référant à la Fig. 3. La sonde 4 est disposée à l'intérieur d'un doigt de gant 7 ménagé à l'intérieur de l'enveloppe 1 de façon à recouvrir entièrement, dans la direction verticale, la plage de mesure 3'–3". Le doigt de gant 7 permet d'isoler la sonde 4 du milieu liquide 2 et ainsi d'éviter la destruction de la sonde 4 par effet thermique ou chimique. La sonde 4 comporte un support 8 fixé à l'intérieur du doigt de gant et un ensemble d'enroulements 10 ayant pour axe l'axe vertical du support 8 et du doigt de gant, ces enroulements étant constitués par les fils conducteurs électriques 12 bobinés à spires sensiblement jointives sur le support 8. Les extrémités des conducteurs électriques 12 sont reliés aux circuits du moyen de détermination de niveau 6.

Sur la Fig. 2, on voit que les enroulements 10 constituent un bobinage primaire continu 14 et un bobinage secondaire 15 comportant des enroulements successifs dans la direction verticale correspondant à l'axe du support et du doigt de gant.

Les spires du bobinage secondaire 15 sont intercalées et placées de façon sensiblement jointive, entre les spires du bobinage primaire 14. On a également représenté sur la Fig. 2, les positions extrêmes 3' et 3" du niveau supérieur 3 du milieu conducteur 2, par rapport à la position des bobinages 14 et 15, lorsque ces bobinages sont en position de mesure dans le doigt de gant 7 à l'intérieur de l'enveloppe 1. Les bobinages 14 et 15 qui s'étendent le long du support 8 de la sonde, sur une longueur sensiblement identique, recouvrent entièrement la plage de mesure 3'–3", dans la direction verticale.

Le bobinage secondaire 15 est constitué par cinq enroulements successifs et distincts 21, 22, 23, 24 et 25.

Les enroulements 21 et 25 comportent un même nombre de spires et sont placés entièrement au-dessus du niveau 3" en ce qui concerne l'enroulement 21, et entièrement en-dessous du niveau 3' en ce qui concerne l'enroulement 25. L'enroulement 21 est ainsi toujours au-dessus du niveau supérieur du milieu conducteur alors que l'enroulement 25 est toujours au-dessous de ce niveau et donc entièrement entouré de métal liquide conducteur.

Des bobinages 22 et 24 à faible nombre de spires sont placés juste au-dessus du niveau 3" et juste en-dessous du niveau 3', respectivement.

Le bobinage central 23 a une longueur sensiblement égale à la distance verticale séparant les niveaux 3' et 3" et se trouve placé entre ces deux niveaux.

Sur la Fig. 3, ont été représentés l'ensemble des circuits électroniques constituant d'une part le moyen d'alimentation 17 du bobinage primaire 14 dont les extrémités des conducteurs 12 sont reliées aux bornes de sortie 18 du dispositif d'alimentation 17 et d'autre part le moyen de détermination 19 du niveau du milieu conducteur dans l'enveloppe 1 du réservoir. Le moyen de détermination du niveau 19 comporte un ensemble de bornes d'entrée 20 groupées par paires, pour le branchement des enroulements secondaires 21, 22, 23, 24 et 25 de la sonde, aux endroits indiqués sur la Fig. 3.

Le moyen d'alimentation du bobinage primaire 14 comporte un oscillateur 26 fournissant un signal rectangulaire, un filtre 27 et un amplificateur de puissance 28 permettant de fournir un courant sensiblement régulé en fréquence et en amplitude, au primaire d'un transformateur 29. Les bornes de sortie 18 du moyen d'alimentation 17 auxquelles sont reliées les extrémités de l'enroulement primaire 14 correspondent aux bornes du secondaire du transformateur 29. On fournit ainsi à l'enroulement primaire 14 de la sonde un courant sensiblement régulé en fréquence et en amplitude.

Le moyen de détermination du niveau 19 comporte trois sous ensembles 19a, 19b et 19c.

Le sous-ensemble 19a comporte cinq transformateurs 30 connectés, du côté primaire, par l'intermédiaire des bornes d'entrée 20, avec les enroulements du bobinage secondaire 15, dans l'ordre indiqué sur la Fig. 3. Les transformateurs 30 sont connectés du côté secondaire à cinq unités de détection 31 qui reçoivent ainsi un signal dont la tension est proportionnelle à la tension induite dans l'enroulement secondaire, par l'enroulement primaire 14 alimenté par le moyen 17. Le sous-ensemble 19a comportant les modules de détection 31 constitue l'étage de détection du moyen de mesure de niveau.

Les modules de détection 31 fournissent en sortie des signaux analogiques représentatifs de l'amplitude et de la phase des tensions induites dans les enroulements du bobinage secondaire 15 de la sonde.

Les signaux analogiques correspondant aux enroulements extrêmes 21 et 25 et à l'enroulement central 23 du bobinage 15 sont transmis au sous-ensemble 19b du moyen de traitement et de détermination 19 qui constitue l'étage de calcul du moyen de détermination du niveau 19. On désigne par $U25$, $U21$ et $U23$ les tensions électriques respectives des signaux analogiques correspondant aux enroulements secondaires 25, 21 et 23; on désigne par $K$ le rapport du nombre de spires des enroulements secondaires 23 et 21 ou 23 et 25, les enroulements 21 et 25 étant identiques.

L'étage de calcul 19b comporte un atténuateur 32, des sommateurs 34 et 35, un comparateur de signaux 36 et un multiplicateur analogique 38. L'atténuateur 32 recevant un signal d'amplitude U23 en entrée est conçu pour fournir un signal de sortie d'amplitude U23/K. Ce signal en sortie de l'atténuateur 32 est fourni sous forme d'un signal négatif au sommateur 35. Les signaux analogiques correspondant respectivement aux enroulements secondaires 21 et 25, d'amplitude respective U21 et U25 sont envoyés sur le sommateur 34, sous forme d'un signal positif et d'un signal négatif respectivement. Le signal de tension U21 est d'autre part envoyé sous forme de signal positif sur le sommateur 35. L'ensemble du comparateur 36 et du multiplicateur analogique 38 constitue un diviseur recevant les signaux analogiques d'amplitude U21–U25 en provenance du sommateur 34 et U21–U23/K en provenance du sommateur 35. Le diviseur ainsi réalisé transforme les signaux reçus pour fournir en sortie un signal d'amplitude α =

$$\frac{U21 - U23/K}{U21 - U25} \, .$$

Ce signal d'amplitude α est représentatif du niveau du milieu conducteur dans l'enveloppe 1 du réservoir. En effet, les tensions U21, U23 et U25 respectivement sont proportionnelles aux tensions induites dans les enroulements 21, 23 et 25, respectivement, avec un même facteur de proportionnalité résultant de la conception des transformateurs 30 et des modules de détection 31. Les enroulements 21 et 25 étant identiques et la tension U23 étant divisée par le nombre K correspondant au rapport des nombres de spires des bobinages 21 et 23, les tensions combinées pour élaborer le signal α sont toutes relatives à un même nombre de spires. La tension U21 correspond à la tension induite par le bobinage primaire dans un enroulement situé dans l'air, au-dessus du niveau du milieu conducteur, la tension U25 correspond à la tension induite par le bobinage primaire dans un enroulement secondaire situé entièrement dans le milieu conducteur alors que la tension U23/K correspondant à la tension induite dans un enroulement ayant le même nombre de spires que les enroulements U21 et U25 situés en partie dans l'air et en partie dans le milieu conducteur. Le rapport des différences de tension correspondant à l'amplitude du signal α traduit donc parfaitement la fraction du bobinage 23 située dans le milieu conducteur. Le signal α aura la valeur zéro lorsque le niveau 3 du milieu conducteur est situé en 3' et la valeur un lorsque ce niveau 3 est située en 3".

Il est à remarquer que le signal α obtenu en faisant le rapport de signaux détectés dans les mêmes conditions en ce qui concerne la nature et la température du milieu dont on mesure le niveau, indépendamment de tout étalonnage préalable, est pratiquement insensible aux variations de température du milieu conducteur et indépendant de la nature de ce milieu conducteur. Le rapport α est obtenu sous

forme d'un signal analogique dont l'amplitude traduit directement la position du niveau 3 sous forme d'une fraction de la plage de mesure correspondant à la distance verticale entre les niveaux extrêmes 3' et 3". Ce signal analogique traduisant directement la position du niveau 3 est recueilli sur la sortie 39, pour être visualisé d'une manière connue, par exemple sur un voltmètre électronique.

Le moyen 19 de mesure de niveau comporte de plus un étage de discrimination 19c recevant les signaux en sortie des modules de détection 31 correspondant aux enroulements secondaires 22 et 24 placés de part et d'autre de l'enroulement central 23. Lorsque le niveau 3 arrive au voisinage de sa position extrême 3' ou de sa position extrême 3", le signal analogique correspondant au signal électrique émis aux bornes des enroulements 24 ou 22 respectivement dépasse un certain seuil détecté par le comparateur 40 ou 41 au niveau de l'étage de discrimination 19c. Il en résulte un signal sur la borne de sortie 42 ou 43 respectivement. Un signal de sortie sur la borne 42 traduit un niveau ayant atteint sa position extrême minimale (niveau 3'). Un signal de sortie sur la borne 43 traduit un niveau ayant atteint sa position extrême maximale (niveau 3"). L'étage de discrimination 19c permet d'éviter d'effectuer des mesures erronées au voisinage des valeurs extrêmes, les tensions U25 ou U21 étant alors fortement perturbées par la présence du niveau du milieu conducteur à leur voisinage immédiat.

Sur les Fig. 4 et 5, on voit un mode de réalisation particulier du support 8 des enroulements, ce support étant constitué par un profilé à section cruciforme visible sur la Fig. 5. Un tel profil cruciforme réalisé en une matière telle que l'acier inoxydable peut être obtenu par soudage de deux cornières 45a et 45b suivant leur arête 46. Le support 8 ainsi réalisé comporte des encoches 48 sur toute sa longueur utile à l'intérieur desquelles sont enroulés les conducteurs 12 pour constituer les spires successives des enroulements primaires et secondaires, les spires des enroulements secondaires étant intercalées entre les spires de l'enroulement primaire.

Comme il est visible sur la Fig. 3, les modules de détection 31 reçoivent le signal en sortie de l'oscillateur 26 du moyen 17 d'alimentation du primaire. Ce signal traduit parfaitement la fréquence et l'amplitude du courant d'excitation du bobinage primaire. En faisant varier cette amplitude et cette fréquence d'excitation, on s'est aperçu que la mesure de niveau est très peu sensible aux variations d'amplitude et de fréquence du courant d'excitation. Il est donc possible d'utiliser un générateur de courant alternatif d'excitation d'une conception très simple, ses performances jouant très peu sur la précision de la mesure de niveau.

On voit donc que les principaux avantages du dispositif suivant l'invention sont l'obtention d'une très bonne précision de mesure, sans étalonnage préalable à la mesure, ce qui permet une utilisation du dispositif dans des milieux de résistivités différentes sans opération intermédiaire, une faible variation des valeurs mesurées, en fonction de la température du milieu conducteur, une faible variation en fonction de la fréquence et de l'amplitude du courant d'excitation de la sonde ainsi que des performances satisfaisantes et reproductibles malgré une conception simple du dispositif.

L'invention ne se limite pas au mode de réalisation qui a été décrit. C'est ainsi qu'on peut utiliser un nombre d'enroulements différent de cinq pour constituer le bobinage secondaire, ce nombre d'enroulements devant cependant être au moins égal à trois dans le cas le plus simple où le bobinage secondaire comporte un enroulement central dont la longueur est sensiblement égale à la distance verticale entre les niveaux extrêmes à mesurer et deux enroulements extrêmes identiques. Au contraire, on peu utiliser un nombre d'enroulements secondaires plus grand que cinq situés les uns à la suite des autres sur un support commun et permettant des mesures de niveau dans des zones successives.

Il est bien évident également qu'on peut utiliser un moyen de comparaison des tensions fournies par les enroulements extrêmes et l'enroulement central d'un bobinage secondaire différent de celui qui a été décrit utilisant des différences et des rapports de tension. On pourra par exemple comparer directement les rapports de la tension électrique induite dans le bobinage central et dans les bobinages extrêmes, pour en déduire la position du niveau 3. Les circuits électroniques de traitement peuvent être en conséquence différents de ceux qui ont été décrits.

Au lieu d'un support en acier inoxydable, en forme de profilé cruciforme, on peut utiliser un support constitué par un cylindre allongé en matériau magnétique, ce qui permet d'avoir des signaux de sortie de niveau plus élevé.

Pour des températures du milieu conducteur inférieures à 200°C, on peut utiliser des conducteurs électriques à isolant de type classique pour constituer les enroulements. Pour des températures plus élevées, on utilisera des conducteurs électriques réfractaires, à isolation thermique, tels que les conducteurs du type Pyroténax.

Dans certains cas, il ne sera pas utile d'isoler la sonde du milieu conducteur par un fourreau ou un doigt de gant tel que décrit dans l'exemple de réalisation, la sonde étant alors directement plongée dans le milieu conducteur.

Enfin, le dispositif de mesure de niveau suivant l'invention s'applique en dehors de la mesure du niveau du sodium liquide dans certaines parties d'un réacteur nucléaire à neutrons rapides; il peut s'appliquer à la mesure du niveau de métaux liquides quelconques, de solutions électrolytiques, de poudres de grains ou de grenailles métalliques dans des réservoirs ou dans des canalisations faisant partie d'installations industrielles diverses.

**Revendications**

1. Dispositif de mesure du niveau d'un milieu conducteur électrique contenu dans une enveloppe (1) dont le niveau supérieur (3) peut se déplacer entre deux positions extrêmes (3', 3") à l'intérieur de l'enveloppe (1), comportant deux bobinages électriques (14, 15) plongés au moins partiellement dans le milieu conducteur (2) et un support de fixation (8) des bobinages (14, 15) par rapport à l'enveloppe (1), la mesure de niveau étant réalisée par mesure de la tension électrique induite par l'un des bobinages (14) ou bobinage primaire qui est alimenté en courant électrique alternatif, dans l'autre bobinage (15) ou bobinage secondaire, le bobinage secondaire comportant au moins trois enroulements distincts (21, 23, 25) placés les uns à la suite des autres dans la direction verticale sur le support (8) en position de mesure dans l'enveloppe (1), avec leur axes d'enroulement verticaux et le dispositif de mesure comportant un moyen de détermination du niveau (3) par détection des tensions induites dans chacun des enroulements du bobinage secondaire (15) par le bobinage primaire (14) disposé sur le support (8) sur toute la longueur du bobinage secondaire, caractérisé par le fait que l'enroulement extrême inférieur (25) est situé entièrement en-dessous de la position extrême inférieure (3') du niveau (3) du milieu conducteur, que l'enroulement extrême supérieur (21) est situé entièrement au-dessus de la position extrême supérieure (3") de ce niveau (3) et que l'enroulement central (23), d'une longueur sensiblement égale à la distance verticale entre les positions extrêmes (3', 3") du niveau (3), est situé entre ces deux positions (3', 3"), et par le fait que le moyen de détermination (6) du niveau est un moyen de comparaison entre les tensions induites dans les enroulements extrêmes (21, 25) d'une part et dans l'enroulement central (23) d'autre part.

2. Dispositif de mesure de niveau suivant la revendication 1 caractérisé par le fait que le moyen de détermination du niveau est constitué par un ensemble de circuits électroniques élaborant un signal analogique d'amplitude $\alpha =$

$$\frac{U21 - U23/K}{U21 - U25} \; .$$

variant entre zéro et un suivant la position du niveau (3) et représentatif de ce niveau, U21, U23 et U25 étant respectivement les tensions induites ramenées à un même nombre de spires par le bobinage primaire (14) dans l'enroulement secondaire extrême supérieur (21), dans l'enroulement central (23) et dans l'enroulement extrême inférieur (25) et K le rapport du nombre de spires dans l'enroulement central et dans l'un des enroulements extrêmes, ces enroulements extrêmes étant identiques.

3. Dispositif de mesure de niveau suivant l'une quelconque des revendications 1 et 2, caractérisé par le fait qu'un enroulement (22, 24) à faible nombre de spires est intercalé entre l'enroulement extrême supérieur (21) et l'enroulement central (23) et entre l'enroulement extrême inférieur (25) et l'enroulement central (23), respectivement, ces enroulements intermédiaires (22, 24) permettant d'émettre un signal lorsque le niveau (3) atteint sa position extrême supérieure (3") et sa position extrême inférieure (3'), respectivement.

4. Dispositif de mesure de niveau suivant l'une quelconque des revendications 1, 2 et 3 caractérisé par le fait que les bobinages (14 et 15) sont disposés à l'intérieur d'un fourreau ou doigt de gant (7) isolant ces bobinages du milieu conducteur (2) contenu dans l'enveloppe (1).

5. Application d'un dispositif de mesure de niveau suivant l'une quelconque des revendications 1 à 4 à la mesure du niveau d'un métal liquide tel que le sodium, dans un réservoir ou dans une canalisation.

6. Application d'un dispositif de mesure de niveau suivant l'une quelconque des revendications 1 à 4 à la mesure du niveau d'un milieu conducteur appartenant au groupe: solutions électrolytiques, poudres métalliques, grains et grenailles métalliques.

## Patentansprüche

1. Vorrichtung zum Messen des Niveaus von in einem Behälter (1) enthaltenem elektrisch leitendem Material, dessen oberes Niveau (3) sich zwischen zwei Endpositionen (3', 3") im Inneren des Behälters (1) bewegen kann, mit zwei elektrischen Wicklungen (14, 15) die wenigstens teilweise in das leitende Material (2) eingetaucht sind und mit einem Befestigungsträger (8) der Wicklungen (14, 15) bezüglich des Behälters (1), wobei die Messung des Niveaus durch Messung der elektrisch induzierten Spannung von einer der Wicklungen (14) oder Primärwicklung verwirklicht wird, die von elektrischem Wechselstrom gespeist wird, in die andere Wicklung (15) oder Sekundärwicklung, wobei die Sekundärwicklung wenigstens drei voneinander getrennte Wicklungen (21, 23, 25) aufweist, die in vertikaler Richtung hintereinander an dem Träger (8) in Meßposition in dem Behälter (1) angeordnet sind, wobei ihre Wicklungsachsen vertikal verlaufen und die Meßvorrichtung eine Bestimmungseinrichtung (6) des Niveaus (3) durch Erfassen der induzierten Spannungen in jede Wicklung der Sekundärwicklung (15) durch die Primärwicklung (14) aufweist, die auf dem Träger (8) auf der ganze Länge der Sekundärwicklung angeordnet ist, dadurch gekennzeichnet, daß die unterste Wicklung (25) vollständig unterhalb der untersten Position (3') des Niveaus (3) des leitenden Materials angeordnet ist, daß die oberste Wicklung (21) vollständig oberhalb der obersten Position (3") des Niveaus angeordnet ist, und daß die mittlere Wicklung (23), welche eine im wesentlichen dem vertikalen Abstand zwischen den Endstellungen (3', 3") des Niveaus (3) entsprechende Länge aufweist, zwischen den beiden Stellungen (3', 3") angeordnet ist, und daß die Bestimmungseinrichtung (6) des Niveaus eine Vergleichereinrichtung zwischen den induzierten Spannungen in die Endwicklungen (21, 25) einerseits und in die zentrale Wicklung (23) andererseits ist.

2. Vorrichtung zur Niveaumessung nach Anspruch 1, dadurch gekennzeichnet, daß die Bestimmungseinrichtung (6) des Niveaus aus einer Anordnung von elektrischen Schaltkreisen gebildet ist, die ein analoges Signal der Amplitude α =

$$\frac{U21 - U23/K}{U21 - U25} \cdot$$

das zwischen Null und Eins gemäß der Stellung des Niveaus (3) variiert und repräsentativ für das Niveau ist, wobei U21, U23 bzw. U25 die induzierten Spannungen sind, die auf eine selbe Anzahl der Windungen pro Primärwicklung (14) in der obersten Sekundärwicklung (21), in der zentralen Wicklung (23) und der untersten Wicklung (25) gebracht sind, und K das Verhältnis der Anzahl der Windungen in der zentralen Wicklung und in einer der Endwicklungen ist, wobei die Endwicklungen identisch sind.

3. Vorrichtung zur Messung des Niveaus nach einem der Ansprüche 1 oder 2, dadurch gekennzeichnet, daß eine Wicklung (22, 24) mit geringer Windungsanzahl zwischen der obersten Wicklung (21) und der zentralen Wicklung (23) und der untersten Wicklung (25) und der zentralen Wicklung (23) entsprechend angeordnet ist, wobei die Mittenwicklungen (22, 24) erlauben ein Signal zu emittieren, wenn das Niveau (3) seine oberste Position (3") bzw. seine unterste Position (3') erreicht.

4. Vorrichtung zur Niveaumessung nach einem der Ansprüche 1, 2 oder 3, dadurch gekennzeichnet, daß die Wicklungen (14 und 15) im Inneren eines Futterals oder Umhüllungsfingers (7) angeordnet ist, der die Wicklungen von dem in dem Behälter (1) enthaltenen leitenden Material (2) isoliert.

5. Verwendung einer Vorrichtung zur Niveaumessung nach einem der Ansprüche 1 bis 4 für die Messung des Niveaus eines flüssigen Metalls wie beispielsweise Natrium, in einem Reservoir oder einer Leitung.

6. Verwendung einer Vorrichtung zur Niveaumessung nach einem der Ansprüche 1 bis 4, bei der Messung des Niveaus eines leitenden Milieus oder Materials aus der Gruppe: elektrolytische Lösungen, metallische Puder, metallische Körner und Metallsand oder -schrot.

## Claims

1. Level measuring device for an electrically conductive medium contained in a casing (1), the top level (3) of which may move between two end positions (3', 3") inside the casing (1), containing two electric coils (14, 15), dipped at least partially in the conductive medium (2), and a mounting support (8) for the coils (14, 15) relative to the casing (1), the level measurement being performed by measuring the electric voltage induced by one of the coils (14) or primary coil, fed with alternating electric current, into the other coil (15) or secondary coil, the secondary coil comprising at least three separate windings (21, 23, 25) positioned next to each other in the vertical direction on the support (8) in the measuring position in the casing (1), their winding axis being vertical and the measuring device containing a means for determining the level (3) by detecting the voltages induced into each of the windings of the secondary coil (15) by the primary coil (14) disposed on the support over the entire length of the secondary coil, characterized in that the lower outer winding (25) is situated completely below the lower end position (3') of the level (3) of the conductive medium, in that the upper outer winding (21) is situated completely above the top end position (3") of said level (3) and that the middle winding (23), having a length approximately equal to the vertical distance between the end positions (3', 3") of the level (3), is situated between said two positions (3', 3"), and in that the level determining means (6) is a means for comparison between the voltages induced into the outer windings (21, 25) on the one hand and into the middle winding (23) on the other hand.

2. Level measuring device according to claim 1, characterized in that the level determining means is formed by an assembly of electronic circuits producing an analogue amplitude signal $\alpha =$

$$\frac{U21 - U23/K}{U21 - U25} \cdot$$

which varies between 0 and 1 according to the position of the level (3) and which is representative of said level, U21, U23 and U25 being respectively the voltages induced by the primary coil (14) relative to an equal number of turns in the upper outer winding (21) of the secondary coil, in the middle winding (23) and in the lower outer winding (25) and K being the ratio of the number of turns in the middle winding and in one of the outer end windings, said outer windings being identical.

3. Level measuring device according to either one of claims 1 or 2, characterized in that a winding (22, 24) with a low number of turns is interposed between the upper outer winding (21) and the middle winding (23) and between the lower outer winding (25) and the middle winding (23) respectively, said intermediary windings (22, 24) allowing a signal, to be produced when the level (3) reaches the upper end position (3") and the lower end position (3') respectively.

4. Level measuring device according to any one of claims 1, 2 and 3, characterized in that the coils (14 and 15) are disposed inside a sheath or sleeve (7) which insulates said coils from the conductive medium (2) contained in the casing (1).

5. Use of a level measuring device according to any one of claims 1 to 4 for the level measurement of a liquid metal, such as sodium, in a tank or pipeline.

6. Use of a level measuring device according to any one of claims 1 to 4 for the level measurement of a conductive medium belonging to the group: electrolytic solutions, metallic powders, metallic granulates and abrasives.

EP 0 200 619 B1

FIG.3

FIG.2

15

21

22

14

3"

23

3'

24

25

FIG.1

6.

12

7

3"

1

4
(14,15)

3

10

3'

8

2

V

48

46

45a

45b

8

V

FIG.4

48

45a

A

46

45b

8

FIG.5

EP 0 200 619 B1